# FASCICULE DE BREVET EUROPEEN

(11) **EP 0 813 505 B1**
(45) Date de publication et mention de la délivrance du brevet: **17.05.2000**
(21) Numéro de dépôt: 96944085.8
(22) Date de dépôt: 26.12.1996
(51) Int. Cl.: C03C 25/10, C08J 5/08

(54) **COMPOSITION D'ENSIMAGE POUR FILS DE VERRE, PROCEDE UTILISANT CETTE COMPOSITION ET PRODUITS RESULTANTS**
SCHICHTZUSAMMENSETZUNG FÜR GLASFASERN, VERWENDUNGSVERFAHREN UND PRODUKTE DARAUS
GLASS YARN SIZING COMPOSITION, METHOD USING SAME AND RESULTING PRODUCTS

(30) Priorité: 05.01.1996 FR 9600068
(43) Date de publication de la demande: 29.12.1997
(73) Titulaire: VETROTEX FRANCE S.A., F-73000 Chambéry (FR)
(72) Inventeur: MOIREAU, Patrick, F-73190 Curienne (FR); POUSSE, Christelle, F-75020 Paris (FR)
(74) Mandataire: Goldenberg, Virginie Isabelle
(86) Numéro de dépôt international: FR9602084
(87) Numéro de publication internationale: WO9725288

(56) Documents cités:
- EP-A- 0 224 727
- EP-A- 0 243 275
- EP-A- 0 369 848
- EP-A- 0 657 395
- WO-A-96/01233
- US-A- 3 473 950
- DATABASE WPI Week 39 Derwent Publications Ltd., London, GB; AN 85-239500 XP002014726 & JP 60 155 553 A (FURUKAWA ELECTRIC CO) , 15 Août 1985
- DATABASE WPI Week 11 Derwent Publications Ltd., London, GB; AN 84-065811 XP002014727 & JP 59 021 542 A (NITTO ELECTRIC IND KK) , 3 Février 1984
- DATABASE WPI Week 42 Derwent Publications Ltd., London, GB; AN 78-74930a XP002014728 & JP 53 102 953 A (SUMITOMO CHEMICAL KK) , 7 Septembre 1978

## Description

La présente invention concerne une composition d'ensimage pour fils de verre, cette composition réagissant à la chaleur. La présente invention concerne également un procédé de production de fils de verre de renforcement utilisant cette composition ainsi que les fils de verre obtenus et les composites réalisés à partir des fils.

Dans la suite du texte, par « polymérisation », « polymériser », « polymérisable »..., on entend respectivement « polymérisation et/ou réticulation », « polymériser et/ou réticuler », « polymérisable et/ou réticulable »...

La fabrication de fils de verre de renforcement se fait de façon connue à partir de filets de verre fondu s'écoulant des orifices de filières. Ces filets sont étirés sous forme de filaments continus, puis ces filaments sont rassemblés en fils de base, lesquels sont ensuite collectés.

Avant leur rassemblement sous forme de fils, les filaments sont revêtus d'un ensimage par passage sur un organe ensimeur. Ce dépôt est nécessaire à l'obtention des fils et permet leur association avec d'autres matières organiques et/ou inorganiques pour réaliser des composites.

L'ensimage sert en premier lieu de lubrifiant et protège les fils de l'abrasion résultant du frottement à grande vitesse des fils sur divers organes lors du procédé précédemment cité.

L'ensimage peut également assurer, notamment après polymérisation, l'intégrité des fils susmentionnés, c'est-à-dire la liaison des filaments entre eux au sein des fils. Cette intégrité est notamment recherchée dans les applications textiles où les fils sont soumis à de fortes contraintes mécaniques. En effet, si les filaments sont peu solidaires les uns des autres, ils se rompent plus facilement et viennent perturber le fonctionnement des machine textiles. Les fils non intègres sont, de plus, considérés comme difficiles à manipuler.

L'ensimage facilite également le mouillage et/ou l'imprégnation des fils par les matières à renforcer et aide à la création de liaisons entre lesdits fils et lesdites matières. De la qualité de l'adhérence de la matière aux fils et de l'aptitude au mouillage et/ou à l'imprégnation des fils par la matière dépendent notamment les propriétés mécaniques des composites obtenus à partir de ladite matière et desdits fils.

Les compositions d'ensimage utilisées doivent être suffisamment stables et compatibles avec les vitesses d'étirage des filaments devant les traverser (plusieurs dizaines de mètres par seconde). Elles doivent notamment résister au cisaillement induit par le passage des filaments et bien mouiller leur surface auxdites vitesses. Dans le cas où elles polymérisent thermiquement, elles doivent présenter une température de réaction suffisamment élevée pour demeurer stables sous filière. Il est également souhaitable que ces compositions présentent, après polymérisation, un taux de conversion maximal (ce taux correspondant au rapport entre le taux de fonctions ayant réagi dans l'ensimage après traitement thermique et le taux, dans l'ensimage, de fonctions réactives susceptibles de réagir, avant traitement thermique) pour garantir notamment l'obtention de fils ensimés de qualité constante (un ensimage présentant un taux de conversion très inférieur au taux théorique attendu étant susceptible d'évoluer dans le temps).

La plupart des ensimages actuellement utilisés sont des ensimages aqueux simples à manipuler, mais devant être déposés en grandes quantités sur les filaments pour être efficaces. L'eau représente généralement 90 % en poids de ces ensimages (pour des raisons de viscosité notamment), ce qui oblige à sécher les fils avant leur utilisation comme renforts, l'eau pouvant nuire à la bonne adhérence entre les fils et les matières à renforcer. Ces séchages sont longs et coûteux, doivent être adaptés aux conditions de fabrication des fils et leur efficacité n'est pas toujours optimale. Lorsqu'ils sont faits pendant l'opération de fibrage (c'est-à-dire avant collecte des fils obtenus par rassemblement des filaments), au niveau des filaments (WO 92/05122) ou au niveau des fils (US-A-3 853 605), ils nécessitent l'implantation de dispositifs de séchage sous chaque filière et lorsqu'ils sont faits sur des enroulements de fils, ils entraînent des risques de migration irrégulière et/ou sélective des composants de l'ensimage au sein des enroulements (les ensimages aqueux ayant déjà tendance à se répartir sur les fils de façon irrégulière du fait de leur nature), et éventuellement des phénomènes de coloration des fils ou de déformation des enroulements. La déformation des enroulements s'observe également, en l'absence de séchage, sur les enroulements à bords droits (stratifils) de fils fins (c'est-à-dire présentant un « titre » ou « masse linéique » de 300-600 tex (g/km) ou moins) revêtus d'ensimages aqueux.

Quelques rares brevets décrivent des ensimages non aqueux mais ces ensimages font généralement appel à des solvants organiques délicats à manipuler et pouvant nuire à la santé des personnes se trouvant alentour parce que toxiques, et/ou posent des problèmes de viscosité qu'il convient de résoudre en chauffant ces ensimages (US 4 604 325) ou en rajoutant des agents adéquats (US 4 609 591). Ces ensimages nécessitent souvent, également, l'implantation de dispositifs particuliers au dessous de chaque filière ; il est notamment nécessaire, lorsque les fils sont collectés sous forme d'enroulements, de traiter les fils avant obtention des enroulements afin d'éviter le collage entre elles des spires de chaque enroulement, ce collage rendant le dévidage des fils difficile. Ces traitements, dont l'efficacité dépend des conditions opératoires, consistent, par exemple, à polymériser l'ensimage en soumettant les fils ensimés à l'action de rayonnements ultraviolets afin de leur conférer une intégrité suffisante et de les rendre manipulables (US-A-5 049 407). L'ensimage polymérisé empêche cependant le glissement des filaments les uns par rapport aux autres, cette absence de mobilité entraînant l'éclatement, par dégradation mécanique de l'ensimage, des fils lorsqu'ils sont coupés et pouvant poser des problèmes dans les applications textiles où les fils utilisés doivent être à la fois intègres et souples.

Parmi les ensimages existants, on peut également citer l'ensimage spécifique décrit dans le document WO 96/01233, cet ensimage étant constitué d'une solution de viscosité inférieure ou égale à 400 CP comprenant moins de 5% de solvant et comprenant un système de base polymérisable thermiquement comprenant au moins 60 % de composant(s) époxy de masse moléculaire inférieure à 750, cet ensimage pouvant également comprendre un amorceur thermique acide de Levis ou base de Levis.

La présente invention a pour objet une composition d'ensimage améliorée, ne présentant pas les inconvénients précédemment mentionnés, cette composition étant destinée à revêtir des fils de verre et étant apte à polymériser sous l'action de la chaleur, cette composition rendant les fils ensimés aisément manipulables, même avant polymérisation, et leur conférant une souplesse compatible avec leurs traitements ultérieurs, cette composition conférant une bonne intégrité aux fils après polymérisation et présentant un taux de conversion important, cette composition protégeant en outre efficacement les fils de l'abrasion, leur conférant la possibilité d'être associés à différentes matières à renforcer en vue de réaliser des pièces composites présentant de bonnes propriétés mécaniques, étant suffisamment stable, notamment sous filière, et étant compatible avec les vitesses d'étirage des filaments.

La présente invention a également pour objet un procédé amélioré de fabrication de fils de verre ensimés, ainsi que des fils de verre ensimés de manipulation facile et présentant des caractéristiques améliorées, lesdits fils étant aptes à renforcer efficacement des matières organiques et/ou inorganiques pour la réalisation de composites.

La composition d'ensimage selon l'invention est constituée d'une solution de viscosité inférieure ou égale à 400 cP comprenant moins de 5 % en poids de solvant et comprenant un système de base polymérisable thermiquement, ledit système de base comprenant au moins 60 % en poids de composants de masse moléculaire inférieure à 750 et comprenant au moins 60 % en poids d'un mélange :
- de composant(s) présentant au moins une fonction réactive époxy,
- et de composant(s) présentant au moins une fonction réactive amine (de préférence primaire ou secondaire), le taux de composant(s) présentant au moins une fonction réactive amine étant d'au moins 6 % en poids de la composition.

L'invention concerne aussi un procédé de production de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils la composition d'ensimage précédemment définie.

L'invention concerne encore des fils revêtus d'un ensimage présentant la composition précédemment définie et/ou obtenus selon le procédé ci-dessus mentionné.

Par la suite, par « composants) époxy » et par « composant(s) amine » on entend, respectivement, «composant(s) présentant au moins une fonction réactive époxy » et « composant(s) présentant au moins une fonction réactive amine ».

Dans la composition selon l'invention, les solvants éventuels sont essentiellement des solvants organiques nécessaires à la mise en solution de certains composés polymérisables. La présence de ces solvants en quantité limitée ne requiert pas de traitements particuliers pour les éliminer ; dans la majeure partie des cas, les ensimages selon l'invention sont, de surcroît, totalement dénués de solvant, c'est-à-dire de composés jouant uniquement un rôle de solvant dans la solution.

Du fait de sa faible viscosité (inférieure ou égale à 400 cP et, de préférence, inférieure ou égale à 200 cP), la composition d'ensimage selon l'invention est compatible avec les conditions d'obtention des fils de verre imposées par le procédé direct, la viscosité de la composition étant adaptée en fonction de la vitesse d'étirage et du diamètre des filaments amenés à la traverser. La composition selon l'invention présente également une vitesse de mouillage sur le fil compatible avec la vitesse d'étirage des fils.

Par « système de base polymérisable thermiquement » selon l'invention, il faut comprendre le ou les composés indispensables à l'ensimage et ayant pour fonction essentielle de participer à la structure de l'ensimage polymérisé, ces composés étant aptes à polymériser thermiquement. En règle générale, le système de base représente entre 60 et 100 % en poids de la composition d'ensimage selon l'invention principalement entre 65 et 99,5 % en poids de la composition et, dans la plupart des cas, entre 70 et 90 % en poids de la composition.

Le système de base est en majorité constitué (de préférence à 80 % en poids et jusqu'à 100 % en poids dans la majorité des cas) de composant(s) époxy et de composant(s) amine (de préférence primaire et/ou secondaire), l'utilisation de ce mélange de composants permettant l'obtention, après polymérisation, de copolymères époxy-amine participant de façon majoritaire à la structure de l'ensimage polymérisé, les propriétés des fils de verre ensimés dépendant directement de cette structure.

En outre, le système de base comprend une majorité (de préférence au moins 70-75 % en poids et jusqu'à 100 % en poids) de composant(s) de masse moléculaire inférieure à 750, ce(s) composant(s) faisant normalement partie, pour la plupart (et, dans la majorité des cas, pour chacun d'entre eux), des composants époxy et amine précités.

De préférence et en général selon l'invention, les composants de masse moléculaire inférieure à 750 précédemment mentionnés sont de masse moléculaire inférieure à 500. De même, dans la plupart des cas selon l'invention et de façon préférée, ces composants sont des monomères (mono ou polyfonctionnels comme explicité ultérieurement), mais le système de base peut également comprendre des composants de masse moléculaire inférieure à 750 sous forme d'oligomères ou de polymères à fonctions partiellement polymérisées.

Selon certains modes de réalisation, le système de base selon l'invention peut éventuellement comprendre une faible proportion de composant(s) participant à la structure de l'ensimage polymérisé mais ne présentant pas de fonctions époxy ou amine et/ou présentant une masse moléculaire plus élevée.

Selon le mode de réalisation préféré de l'invention permettant d'obtenir des résultats particulièrement satisfaisants, le système de base est uniquement constitué de composant(s) époxy et de composant(s) amine (les amines étant préférentiellement choisies parmi les amines primaires et les amines secondaires) et/ou, éventuellement, est constitué uniquement de composants de masse moléculaire inférieure à 750.

Les composants époxy (ou amine) pouvant être utilisés dans le système de base peuvent présenter une (composants monofonctionnels) ou plusieurs (composants polyfonctionnels) fonctions réactives époxy (respectivement amine).

Le ou les composants époxy du système de base peuvent être notamment un ou plusieurs des composants suivants : alkyl glycidyl éther à chaîne aliphatique C₄-C₁₆... ; crésyl- ou phényl- ou nonylphényl- ou p-tert-butyl phényl- ou 2-éthylhexyl- etc. glycidyl éther ; limonène époxyde ; cyclohéxène monoxyde ; glycidyl ester de l'acide versatique ou de l'acide néodécanoïque ; etc. (les composants précédents étant des composants monofonctionnels) ; 1,4 butanediol- ou néopentylglycol- ou résorcinol- ou cyclohexane diméthanol- ou 1,6 hexanediol- ou dibromonéopentylglycol- etc. diglycidyl éther ; dérivé diépoxydé des bisphénols A ou F ; 3,4-époxycyclohexylméthyl-3,4-époxycyclohexane carboxylate ; bis-(3,4-époxycyclohexyl) adipate, polyglycol diépoxyde ; diglycidyl ester de l'anhydride hexahydrophtalique ; diglycidyl hydantoïne ; 2-(3,4-époxycyclohexyl)-5,5-spiro-(3,4-époxycyclohexyl)-m-dioxane, vinylcyclohexène dioxyde ; triméthyloléthane- ou triméthylolpropane- ou trisphénylolméthane- ; etc. triglycidyléther, triglycidyl éther d'huile de palme ; triglycidyl éther du paraaminophénol ; tétra (paraglycidoxyphényl) éthane ; 4, 4'- (diglycidyl amino) diphényl méthane ; polyglycidyl éther d'un polyol aliphatique, polybutadiène époxyde ; résine époxyphénol novolaque ou époxy crésol novolaque ; triglycidyl isocyanurate ; N,N,N',N'-tétraglycidyl-A,A'-bis(4-aminophényl)- ou N,N,N',N'-tétraglycidyl-A,A'-bis(4-amino-3,5-diméthyl-phényl)- etc. p-diisopropylbenzène ; etc. (ces composants étant des composants polyfonctionnels).

En règle générale selon l'invention, la proportion de composant(s) époxy du système de base est comprise entre 15 et 85 % en poids de la composition d'ensimage, principalement entre 25 et 80 % en poids environ de la composition d'ensimage. Dans la plupart des cas, elle est comprise entre 35 et 75 % en poids de la composition d'ensimage.

Le ou les composants amine du système de base sont, de préférence, des composants amine primaire et/ou secondaire et peuvent être notamment un ou plusieurs des composants suivants : isophorone diamine, menthane diamine, N-aminoéthylpipérazine, ou encore para ou méta-phénylène dianiline, oxy dianiline, diéthyltoluène diamine, 4,4'méthylène bis (2-chloroaniline), 4,4'-diamino diphényl méthane, 3,3'-diamino diphényl méthane, 4,4'-diaminodiphényl sulfone, A-(2-aminométhyléthyl)-w-(2-aminométhyléthoxy)-poly-(oxy(méthyl-1,2éthandiyl)), amine secondaire à chaîne aliphatique C₄-C₂₀ (dipentyl-amine, diisopentylamine, dihexylamine...), N-éthyl méthallylamine, dibenzylamine, pyrrole, 1-(2-hydroxyéthyl)-2-imidazolidinone, 2-pipéridinone, 1-H-pyrrazole, 2-méthylpipérazine, 2,6-diméthylmorpholine, 2-isopropyl-imidazole, 2-propyl-imidazole, benzoguanamine, 2,6-diaminopyridine, diamino-1-phényl-1,3,3-triméthylindane, polyamidoamine, dérivé de polyamidoamine, dérivé alkoxylé de polyéthylènepolyamine, N'-(3-aminopropyl)-N-N'-diméthyl-1,3-propanediamine, cyanoguanidine, ou éventuellement 2-butyl-2-éthyl-1,5-pentane diamine, éthylène diamine, héxaméthylène diamine, amine primaire à chaîne aliphatique C₄-C₂₀, etc.

Il peut également être possible éventuellement d'utiliser comme composant(s) amine du système de base un ou des composants amine tertiaire, par exemple un ou des composants suivants : 2-phényl imidazoline, 2-éthylimidazole, 1,1-diméthoxy N,N diméthylméthanamine, N,N, N', N'-tétraméthyl-4,4'-diaminodicyclohexylméthane, N,N,N',N", N"-pentaméthyldiéthylènetriamine, N,N-bis-(2-hydroxyéthyl) aniline, tétrabutylurée, acide 4-(diéthylamino) benzoïque, N-méthylpyrrolidine, etc.

En règle générale selon l'invention, la proportion de composant(s) amine (de préférence primaire ou secondaire) du système de base est supérieure ou égale à 6 % en poids de la composition afin de favoriser la réaction de copolymérisation avec le(s) composant(s) époxy. Généralement, elle est comprise entre 6 et 65 % en poids de la composition d'ensimage, principalement entre 8 et 45 % en poids environ de la composition. Dans la plupart des cas, elle est comprise entre 10 et 40 % en poids de la composition d'ensimage.

De préférence selon l'invention, principalement dans le cas où les composants amine du système de base sont des composants amine primaire ou secondaire, les composants du système de base et leurs taux au sein du système de base sont choisis de façon à ce que le rapport r entre le nombre de sites réactifs époxy et le nombre de sites réactifs amine en présence soit compris entre 0,15 et 6 (une fonction époxy comptant pour un site réactif époxy, une fonction amine primaire comptant pour deux sites réactifs amine et une fonction amine secondaire comptant pour un site réactif amine, notamment) de façon à permettre une polymérisation suffisante de la composition d'ensimage, par formation notamment des copolymères époxy-amine, lors du traitement thermique de polymérisation. Dans la plupart des cas selon l'invention, ce rapport r est compris entre 0,2 et 5 et, de préférence, il est compris entre 0,25 et 4.

Dans un mode de réalisation de l'invention, la composition d'ensimage comprend, en plus du système de base, au moins un catalyseur spécifique favorisant la polymérisation de l'ensimage sous l'action de la chaleur, en facilitant l'ouverture des fonctions époxy, principalement dans le cas où le ou les composants amine du système de base sont des composants amine primaire ou secondaire et sont peu réactifs. Ce catalyseur est préférentiellement choisi parmi les bases faibles, éventuellement les amines tertiaires ou dérivés aminés tertiaires pouvant également jouer un rôle de catalyseur tels que les trialkyl amines, les époxy amines (N-2,3 diépoxy propyl aniline), les N,N dialkylalkanol amines, les sels aminés tertiaires de polyacides, etc.

Le taux de composants spécifiques jouant uniquement le rôle de catalyseurs du système époxy-amine dans la composition d'ensimage est généralement inférieur à 4 % en poids de la composition d'ensimage, dans la plupart des cas inférieur à 2 % en poids et, de préférence, est inférieur ou égal à 1 % en poids de la composition d'ensimage. La présence d'un catalyseur permet d'utiliser des composants amine primaire et/ou secondaire moins réactifs et d'abaisser la température de polymérisation de l'ensimage. Dans le cas de composants amine très réactifs ou « autocatalysés » tels que la N-aminoéthyl pipérazine, la menthane diamine ou les dérivés imidazole tels que le 2-propyl-imidazole, la présence d'un composant jouant uniquement le rôle de catalyseur n'est par contre pas nécessaire.

Outre la structure de base et éventuellement le(s) catalyseur(s) spécifique(s), la composition selon l'invention peut comprendre des additifs en faible quantité, ces additifs donnant des propriétés particulières à la composition d'ensimage mais ne participant pas de manière essentielle à la structure de l'ensimage, contrairement au système de base. Même si ces additifs sont à distinguer du système de base, ils peuvent être néanmoins polymérisables thermiquement comme les composés du système de base.

La composition selon l'invention peut ainsi comprendre, à titre d'additif, au moins un agent de couplage permettant notamment d'accrocher l'ensimage sur le verre, la proportion du ou des agents de couplage étant comprise entre 0 et 25 % en poids de l'ensimage et étant, de préférence, inférieure ou égale à 15 % en poids de l'ensimage. Ces agents peuvent être un ou plusieurs des composants suivants : silanes tels que le gamma-glycidoxypropyltriméthoxysilane, le gamma-méthacryloxypropyltriméthoxysilane, le triméthoxysilane polyéthoxylé-propoxylé, le gamma-acryloxypropyl triméthoxysilane, le vinyl triméthoxysilane, le phénylaminopropyl triméthoxysilane, le styrylaminoéthyl aminopropyl triméthoxysilane, le ter-butyl carbamoyl propyl triméthoxysilane, etc. ; titanates, zirconates, siloxannes, etc.

La composition selon l'invention peut également comprendre, à titre d'additif, au moins un agent filmogène jouant uniquement un rôle d'agent de glissement et facilitant le fibrage, dans des proportions comprises entre 0 et 15 % en poids et, de préférence, inférieures ou égales à 8 % en poids. La présence de ce ou ces agents empêche un frottement important des filaments sur le dispositif ensimeur lorsque les filaments sont étirés à grande vitesse (plus de 40 m/s) et/ou lorsqu'ils sont très fins, ces agents étant cependant coûteux et pouvant entraîner une diminution des caractéristiques mécaniques des composites. Ces agents de fibrage peuvent être un ou plusieurs des composants suivants : silicones, siloxannes ou polysiloxannes tels que le glydicyl(n)polydiméthyl siloxanne, l'alpha-oméga acryloxypolydiméthyl siloxanne, etc., dérivés de silicones tels que des huiles de silicone, etc.

La composition selon l'invention peut également comprendre, à titre d'additif, au moins un agent de mise en oeuvre textile jouant essentiellement un rôle de lubrifiant, dans des proportions comprises entre 0 et 15 % en poids et, de préférence, comprises entre 0 et 8 % en poids. Ces agents textiles peuvent être un ou plusieurs des composants suivants : esters gras (éventuellement éthoxylés ou propoxylés), dérivés des glycols (notamment de l'éthylène ou du propylène glycol), tels que des palmitates d'isopropyle ou de cétyle, des stéarates d'isobutyle, des laurates de décyle, des adipates d'éthylène glycol, des polyéthylène glycols ou des polypropylène glycols de poids moléculaire inférieur à 2000, des stéarates d'isopropyle, etc.

L'ensimage peut également comprendre, à titre d'additif, au moins un agent d'adaptation aux matières à renforcer, dans le cas des matières cimentaires notamment.

La composition d'ensimage selon l'invention protège efficacement les fils de l'abrasion, est compatible avec les vitesses d'étirage des filaments et ne nécessite pas le recours à une opération de séchage avant polymérisation ou le recours à un traitement particulier entre le dépôt sur le fil et l'opération de collecte des fils ensimés.

Par ailleurs, lorsque la composition selon l'invention est déposée sur les filaments en cours d'étirage, elle se répartit très rapidement sur toute leur surface et forme un véritable film de protection pour chacun d'entre eux. Le fil obtenu par rassemblement des filaments et revêtu de la composition non traitée thermiquement (c'est-à-dire non encore polymérisée) est ainsi constitué d'un faisceau de filaments gainés qui peuvent glisser les uns sur les autres, ce fil présentant alors une souplesse importante, particulièrement avantageuse dans le cas où ce fil est destiné à être coupé, le gainage des filaments offrant en outre une protection supplémentaire contre l'abrasion. Un tel fil ne présente pas une intégrité au sens ordinaire du terme, c'est-à-dire qu'il n'est pas constitué de filaments fixés entre eux grâce notamment à une liaison par collage provoquée par un ou plusieurs constituants de l'ensimage telle que peuvent la provoquer des agents filmogènes collants présents en quantité importante dans un ensimage. Malgré cela, ce fil revêtu de la composition non encore polymérisée est aisément manipulable et, lorsqu'il est bobiné sous forme d'enroulements, peut facilement être extrait des enroulements sans avoir subi au préalable de traitement de polymérisation de l'ensimage. Les fils revêtus de la composition d'ensimage non encore polymérisée ont par ailleurs une très bonne aptitude au mouillage et à l'imprégnation par des matières à renforcer, l'imprégnation pouvant ainsi se faire plus rapidement (gain de productivité) et les composites obtenus présentant ainsi un aspect plus homogène et certaines propriétés mécaniques améliorées.

L'intégrité proprement dite des fils par collage des filaments les constituant est obtenue après polymérisation de la composition d'ensimage par action de la chaleur. Cette intégrité est recherchée au niveau des fils devant être soumis à de fortes contraintes mécaniques, par exemple dans des applications textiles ou, le cas échéant, après coupe, au niveau des fils coupés destinés à renforcer des matières organiques et/ou inorganiques. Il est préférable, dans de tels cas, d'effectuer la polymérisation de l'ensimage avant respectivement la mise en oeuvre des fils dans des applications textiles ou l'association des fils coupés avec une matière à renforcer.

L'intégrité obtenue après polymérisation de l'ensimage est particulièrement importante alors que le taux d'ensimage sur les fils est relativement faible (la perte au feu des fils revêtus de la composition d'ensimage et/ou obtenus selon le procédé de l'invention n'excédant pas 3 % en poids). La quantité de composition d'ensimage devant être déposée sur les fils pour être efficace est avantageusement peu importante et permet cependant d'obtenir des fils présentant de très bonnes caractéristiques, dont l'intégrité (l'intégrité obtenue étant élevée même pour des taux d'ensimage sur les filaments de l'ordre de 0,6 % en poids).

La composition d'ensimage selon l'invention présente également après polymérisation un taux de conversion maximal, le taux de conversion des composants amine étant, par exemple, proche de 100 % lorsque le rapport r est supérieur à 1.

On observe par ailleurs que, de façon surprenante, des propriétés comme la résistance à la traction des fils selon l'invention sont meilleures après un début de vieillissement en milieu humide que celles obtenues avant vieillissement des fils.

Les fils selon l'invention peuvent être associés avantageusement à différentes matières à renforcer en vue de la réalisation de pièces composites présentant de bonnes propriétés mécaniques. La composition selon l'invention rend les fils particulièrement compatibles avec les matières à renforcer, notamment avec les matières organiques et en particulier les matières époxy, mais également avec les matières minérales telles que les matières cimentaires. Elle permet également l'imprégnation des fils ensimés par la matière à renforcer. Cette composition est particulièrement adaptée pour la production de fils continus collectés sous forme de stratifils, de gâteaux, de cops, de mats..., ou pour la production de fils coupés, ces différents fils étant composés de filaments de diamètre pouvant aller de 5 à environ 24 microns. La composition d'ensimage selon l'invention est notamment adaptée à la production de fils fins (de titre inférieur à 600 tex) collectés sous forme de stratifils, contrairement aux ensimages aqueux traditionnels.

La composition d'ensimage selon l'invention est déposée avantageusement au cours du procédé selon l'invention sur des filaments destinés à être rassemblés en fils puis est polymérisée sous l'action d'un traitement thermique, ledit traitement se faisant indépendamment de l'opération de fibrage (des dispositifs n'étant ainsi pas nécessaires en-dessous de chaque filière) et pouvant être effectué à différents stades du procédé après fibrage.

Le traitement thermique peut notamment se faire sur les fils collectés ou lors de la réalisation d'un composite par association des fils ensimés à une matière organique. Dans le cas où les fils obtenus sont collectés sous forme d'enroulements, le traitement thermique peut se faire sur les enroulements de fils préalablement à l'utilisation des fils, notamment dans des applications textiles. Si le traitement thermique se fait au niveau des enroulements de fils avant débobinage des fils, il est souhaitable que les spires de fil constituant lesdits enroulements présentent un angle de croisure au moins égal à 1,5° pour éviter des collages importants entre spires et entre couches de fils par l'intermédiaire de l'ensimage polymérisé, ces collages rendant le dévidage des fils difficile.

Les fils obtenus après rassemblement des filaments peuvent également être collectés sur des supports récepteurs en translation. Ils peuvent en effet être projetés par un organe servant également à les étirer, vers la surface de collecte se déplaçant transversalement à la direction des fils projetés en vue d'obtenir une nappe de fils continus entremêlés appelée « mat », auquel cas le traitement thermique peut se faire sur les fils répartis sur la surface de collecte. Le cas échéant, un liant (ce liant pouvant, éventuellement, comprendre et apporter à l'ensimage le(s) catalyseur(s) mentionné(s) précédemment) peut avoir été projeté sur le mat avant traitement thermique de l'ensemble et le traitement thermique peut permettre de polymériser à la fois le liant et l'ensimage.

Les fils peuvent également être coupés avant collecte par un organe servant également à les étirer, les fils coupés étant collectés sur des supports récepteurs en translation, auquel cas le traitement thermique se fait préférentiellement au niveau des fils coupés répartis sur les supports récepteurs.

Les temps de traitement pour des fils collectés sous forme de stratifils de plusieurs kilogrammes sont d'au moins 1 heure à des températures supérieures à environ 100°C, de préférence de l'ordre de 120-140°C, le temps de traitement variant selon la forme et le poids du stratifil et la majeure partie de ce temps étant consacrée à l'élévation de température de la masse de verre contenue dans l'enroulement. Lorsque les fils selon l'invention sont collectés sur un ou plusieurs supports en translation et lorsque le traitement thermique se fait sur le ou les supports, le temps de traitement est, par exemple, de l'ordre de 15 à 20 minutes à des températures supérieures à 100°C et, de préférence, d'environ 120 à 140°C.

Les fils peuvent également être collectés sans être soumis à un traitement thermique, le traitement thermique se faisant ultérieurement. Notamment, les fils peuvent être collectés sous forme d'enroulements, puis être extraits desdits enroulements pour subir des traitements supplémentaires (par exemple pour être coupés par un organe servant également à les entraîner mécaniquement), le traitement thermique pouvant se faire sur les fils avant, pendant ou après le ou les traitements supplémentaires (notamment pour la coupe, le traitement thermique peut se faire sur l'organe de collecte des fils coupés...).

Les fils ensimés peuvent également être collectés sans avoir été traités thermiquement, puis être traités thermiquement après association avec une matière organique lors de la réalisation d'un composite, ladite matière comprenant éventuellement au moins un catalyseur tel que précédemment mentionné. Selon la matière organique utilisée, le traitement thermique peut s'accompagner d'un traitement par rayonnement ultraviolet, d'un traitement par faisceau d'électrons, etc. Le temps de traitement thermique lors de la réalisation d'un composite est généralement d'au moins 2 heures, à des températures supérieures à environ 130°C et, de préférence, de l'ordre de 180-200°C.

Les fils de verre revêtus de l'ensimage selon l'invention et/ou obtenus selon le procédé de l'invention sont revêtus d'un ensimage non polymérisé, ou d'un ensimage polymérisé après traitement thermique. Ces fils présentent une perte au feu avantageusement inférieure à 3 % en poids et, de préférence, inférieure à 1,5 %. La faible quantité d'ensimage déposée sur le fil permet de réduire considérablement les problèmes de collage entre fils, notamment lorsqu'ils sont collectés sous forme d'enroulements, permet également une meilleure ouverture du fil lors de l'imprégnation par une matière à renforcer et est économiquement avantageuse.

Les fils obtenus selon l'invention sont aisément manipulables et peuvent, après collecte, se trouver sous différentes formes nécessitant ou non des étapes supplémentaires de traitement des fils, ces étapes se faisant avant ou après le traitement thermique et/ou la collecte des fils. Les fils de verre peuvent ainsi se présenter sous forme de fils continus, de fils coupés, peuvent avoir été assemblés sous forme de tresses, de rubans, de mats ou de réseaux, tissés ou non... Les fils selon l'invention présentent notamment de bonnes propriétés de résistance à la traction.

Les composites selon l'invention sont avantageusement obtenus par association d'au moins des fils de verre selon l'invention et d'au moins une matière organique et/ou inorganique, le taux de verre au sein de ces composites étant généralement compris entre 30 et 70 % en poids.

D'autres avantages et caractéristiques de l'invention apparaîtront à la lumière des exemples suivants donnant, à titre illustratif mais non exhaustif, des compositions d'ensimage selon l'invention et des caractéristiques des fils revêtus de ces compositions ou des caractéristiques des composites comprenant lesdits fils.

### EXEMPLE 1

Des filaments de 14 microns de diamètre obtenus par étirage de filets de verre fondu selon le procédé de l'invention sont revêtus de l'ensimage de composition suivante exprimée en pourcentages pondéraux :

### Composants du système de base de masse moléculaire inférieure à 750 :

- triméthylolpropane triglycidyl éther⁽¹⁾ 32,0 % • 2-éthylhexylglycidyl éther⁽²⁾ 40,0 % • mélange à base d'amines primaires aromatiques⁽³⁾ 16,0 %

(1) Commercialisé sous la référence « Heloxy 5048 » par la Société SHELL
(2) Commercialisé sous la référence « Heloxy 116 » par la Société SHELL
(3) Commercialisé sous la référence « XU 205 » par la Société CIBA GEIGY

### Additifs :

- agent de couplage gamma-méthacryloxypropyl triméthoxysilane⁽⁴⁾ 12,0 %

(4) Commercialisé sous la référence « Silquest A 174 » par la Société OSi

Le rapport r dans cette composition est de 1,36 et cette composition présente une viscosité de 48 cP à 20°C.

Les filaments sont rassemblés en fils, lesquels sont bobinés sous forme de stratifils présentant une masse approximative de 13,5 kg, puis les stratifils sont chauffés à 160°C pendant 8 heures. Les fils obtenus présentent un titre de 320 tex et une perte au feu de 0,55 %.

Les fils sont ensuite extraits des enroulements pour mesurer leur force et leur ténacité à la rupture en traction dans les conditions définies par la norme ISO 3341. La force à la rupture en traction mesurée sur 8 à 10 éprouvettes est d'environ 16,7 kgf (écart-type de 0,7 kgf) et la ténacité à la rupture en traction est d'environ 52,5 g/tex (écart-type de 2,2 g/tex).

Des plaques composites à fils parallèles sont également réalisées conformément à la norme NF 57152 à partir des fils obtenus. La résine renforcée est la résine « Epoxy LY 556 » commercialisée sous cette référence par la société CIBA GEIGY à laquelle on ajoute, pour 100 parts en poids de résine époxy, 90 parts d'un durcisseur commercialisé sous la référence « HY 917 » par la société CIBA GEIGY et 0,5 parts d'un accélérateur commercialisé sous la référence « DY 070 » par la société CIBA GEIGY.

Les plaques réalisées sont ensuite traitées thermiquement et les propriétés mécaniques présentées par ces plaques, en flexion et en cisaillement, sont mesurées respectivement selon les normes ISO 178 et ISO 4585. La contrainte à la rupture en flexion, pour un taux de verre ramené à 100 %, est d'environ 2463,2 MPa (écart-type de 66,3 MPa) pour dix éprouvettes et la contrainte à la rupture en cisaillement est d'environ 78,5 MPa (écart-type de 1,2 MPa).

### EXEMPLE 2

Des filaments de 14 microns de diamètre obtenus selon l'invention sont revêtus de l'ensimage de composition suivante (pourcentages pondéraux) :

### Composants du système de base de masse moléculaire inférieure à 750 :

- triméthylolpropane triglycidyl éther⁽¹⁾ 27,0 %
- crésyl glycidyl éther⁽⁵⁾ 30,0 %
- diglycidyl éther du cyclohexane diméthanol⁽⁶⁾ 15,0 %
- 2-isopropyl imidazole⁽⁷⁾ 12,0 %

(5) Commercialisé sous la référence « Héloxy 62 » par la Société SHELL
(6) Commercialisé sous la référence « Héloxy 107 » par la Société SHELL
(7) Commercialisé sous la référence « Actiron NXJ 66 » par la Société PROTEX

### Additifs :

- agent de couplage gamma-méthacryloxypropyl triméthoxysilane⁽⁴⁾ 10,0 %
- agent textile palmitate d'isopropyle 6,0 %

Le rapport r dans cette composition est de 3,94 et cette composition présente une viscosité de 76 cP à 20°C.

Les filaments sont rassemblés en fils, lesquels sont bobinés sous forme de stratifils de 13,5 kg environ puis sont chauffés à 120°C pendant 8 heures. Les fils obtenus présentent un titre de 320 tex et une perte au feu de 0,66 %. La force et la ténacité de rupture en traction des fils sont ensuite mesurées comme dans l'exemple 1. La force à la rupture en traction est d'environ 18,3 kgf (écart-type de 0,7 kgf) et la ténacité à la rupture en traction est d'environ 57,5 g/tex (écart-type de 2,1 g/tex). La résistance à l'abrasion des fils est également évaluée en pesant la quantité de bourre formée après passage des fils sur une série de tiges. Pour différents fils revêtus de l'ensimage polymérisé décrit dans le présent exemple, la quantité de bourre à l'issue du test est de l'ordre de 31 mg par kg de fil testé.

A titre de comparaison, des fils revêtus d'un ensimage aqueux à base d'une émulsion de résine époxy, de silanes et de tensioactifs, ces fils étant séchés selon des méthodes ordinaires peuvent former 200 voire 500 mg de bourre par kg de fil.

### EXEMPLE 3

Des filaments de 14 microns de diamètre obtenus selon l'invention sont revêtus de l'ensimage de composition suivante (pourcentages pondéraux) :

### Composants du système de base de masse moléculaire inférieure à 750 :

- crésyl glycidyl éther⁽⁵⁾ 12,0 %
- diglycidyl éther du cyclohexane diméthanol⁽⁶⁾ 35,0 %
- résine époxydée acrylée sur base aliphatique⁽⁸⁾ 25,0 %
- mélange à base d'amines primaires aromatiques⁽⁹⁾ 16,0 %

(8) Commercialisé sous la référence « IRR 282 » par la Société UCB
(9) Commercialisé sous la référence « XU 350 » par la Société CIBA GEIGY

### Additifs :

- agent de couplage alkylsilane polyéthoxylé⁽¹⁰⁾ 6,0 %
- agent de couplage gamma-méthacryloxy propyl triméthoxysilane⁽⁴⁾ 6,0 %

(10) Commercialisé sous la référence « Silquest A 1230 » par la Société OSi

Le rapport r dans cette composition est de 1,36 et cette composition présente une viscosité de 136 cP à 20°C.

Les filaments sont rassemblés pour donner des fils selon l'invention, lesquels sont bobinés puis sont chauffés à 160°C pendant 8 heures.

### EXEMPLE 4

Des filaments obtenus selon l'invention sont revêtus de l'ensimage de composition suivante (pourcentages pondéraux) :

### Composants du système de base de masse moléculaire inférieure à 750 :

- triméthylolpropane triglycidyl éther⁽¹⁾ 29,0 %
- 2-éthylhexyl glycidyl éther⁽²⁾ 41,0 %
- menthane diamine 15,0 %

### Additifs :

- agent de couplage gamma-méthacryloxypropyl triméthoxy silane⁽⁴⁾ 10,0 %
- agent textile palmitate d'isopropyle 5,0 %

Le rapport r dans cette composition est de 1,07 et cette composition présente une viscosité de 27 cP environ à 20°C.

Les filaments sont ensuite rassemblés pour donner des fils selon l'invention.

### EXEMPLE 5

Des filaments obtenus selon l'invention sont revêtus de l'ensimage de composition suivante (pourcentages pondéraux) :

### Composants du système de base de masse moléculaire inférieure à 750 :

- 3,4-époxycyclohexylméthyl-3,4-époxycyclohexane carboxylate⁽¹¹⁾ 33,0 %
- mélange à base de vinylcyclohexène monoxyde⁽¹²⁾ 31,0 %
- isophorone diamine 20,0 %

(11) Commercialisé sous la référence « UVR 6110 » par la Société UNION CARBIDE
(12) Commercialisé sous la référence « UVR 6200 » par la Société UNION CARBIDE
(13) Commercialisé sous la référence « Araldite GY 250 » par la Société CIBA GEIGY

### Additifs :

- agent de couplage gamma-méthacryloxypropyl triméthoxy silane⁽⁴⁾ 10,0 %
- agent textile palmitate d'isopropyle 6,0 %

Le rapport r dans cette composition est de 1,04 et cette composition présente une viscosité de 37 cP environ à 20°C.

Les filaments sont ensuite rassemblés pour donner des fils selon l'invention.

### EXEMPLE 6

On procède de la même façon que dans l'exemple 5 en remplaçant la composition d'ensimage utilisée par la composition suivante (pourcentages pondéraux) :

### Composants du système de base de masse moléculaire inférieure à 750 :

- 3,4-époxycyclohexylméthyl-3,4-époxycyclohexane carboxylate⁽¹¹⁾ 32 %
- mélange à base de vinylcyclohexène monoxyde⁽¹²⁾ 32 %
- N-aminoéthyl pipérazine 20 %

### Additifs :

- agent de couplage gamma-méthacryloxypropyl triméthoxy silane⁽⁴⁾ 10 %
- agent textile palmitate d'isopropyle 6 %

Le rapport r dans cette composition est de 0,95 et cette composition présente une viscosité de 30 cP à 20°C.

### EXEMPLE COMPARATIF

Les caractéristiques mécaniques des composites obtenus à l'aide des fils décrits dans l'exemple 1 sont comparées aux caractéristiques mécaniques des composites obtenus à l'aide de fils de référence utilisés pour le renforcement de matières époxy, ces fils étant revêtus d'un ensimage aqueux à base d'une émulsion de résine époxy, de silanes et de tensioactifs, ces derniers composites étant réalisés de la même façon que dans l'exemple 1. La contrainte à la rupture en flexion, pour un taux de verre ramené à 100 % et mesurée comme dans l'exemple 1, est d'environ 2375 MPa et la contrainte à la rupture en cisaillement est d'environ 86 MPa.

On observe dans les exemples précédents que les fils revêtus d'ensimage selon l'invention sont aisément manipulables, qu'il aient été traités thermiquement ou non, et présentent de bonnes propriétés de résistance à la traction.

Les fils obtenus selon l'invention présentent par ailleurs une faible perte au feu, une bonne résistance à l'abrasion et permettent de renforcer efficacement des matières organiques et/ou inorganiques.

Les faibles taux de bourre obtenus lors des tests de résistance à l'abrasion des fils selon l'exemple 2 et les bonnes propriétés de résistance à la traction de ces fils permettent également de dire que ces fils selon l'invention présentent une bonne intégrité. Les fils obtenus donnent également de bons résultats en texturation.

Les fils de verre selon l'invention peuvent servir à diverses applications, par exemple à des applications textiles telles que la fabrication de chaînes par ourdissage, ou directement à des applications de renforcement telles que le renforcement de matières organiques (par exemple des matières plastiques) ou inorganiques (par exemple des matières cimentaires) pour obtenir des produits composites.

## Revendications

1. Fil de verre revêtu d'une composition d'ensimage constituée d'une solution de viscosité inférieure ou égale à 400 cP comprenant moins de 5 % en poids de solvant et comprenant au moins un système de base polymérisable et/ou réticulable thermiquement, ledit système de base comprenant au moins 60 % en poids de composants de masse moléculaire inférieure à 750 et comprenant au moins 60 % en poids d'un mélange :
• de composant(s) présentant au moins une fonction réactive époxy,
• et de composant(s) présentant au moins une fonction réactive amine, le taux de composants présentant au moins une fonction réactive amine étant d'au moins 6 % en poids de la composition.

2. Fil de verre selon la revendication 1, *caractérisé en ce que* le système de base comprend au moins 60 % en poids d'un mélange :
• de composant(s) présentant au moins une fonction réactive époxy,
• et de composant(s) présentant au moins une fonction réactive amine primaire ou secondaire.

3. Fil de verre selon l'une des revendications 1 ou 2, *caractérisé en ce que* le système de base représente entre 60 et 100 % en poids de la composition d'ensimage.

4. Fil de verre selon l'une des revendications 1 à 3, *caractérisé en ce que* le système de base est uniquement constitué de composants présentant au moins une fonction réactive époxy ou amine.

5. Fil de verre selon l'une des revendications 1 à 4, *caractérisé en ce que* la composition comprend, en outre, au moins un catalyseur.

6. Fil de verre selon l'une des revendications 1 à 5, *caractérisé en ce que* la composition comprend en outre au moins un agent de couplage dans des proportions comprises entre 0 et 25 % en poids.

7. Fil de verre selon l'une des revendications 1 à 6, *caractérisé en ce que* la composition comprend en outre au moins un agent filmogène dans des proportions comprises entre 0 et 15 % en poids.

8. Fil de verre selon l'une des revendications 1 à 7, *caractérisé en ce que* la composition comprend en outre au moins un agent textile dans des proportions comprises entre 0 et 15 % en poids.

9. Composition d'ensimage pour fil de verre constituée d'une solution de viscosité inférieure ou égale à 400 cP comprenant moins de 5 % en poids de solvant et comprenant au moins un système de base polymérisable et/ou réticulable thermiquement, ledit système de base comprenant au moins 60 % en poids de composants de masse moléculaire inférieure à 750 et comprenant au moins 60 % en poids d'un mélange :
• de composant(s) présentant au moins une fonction réactive époxy,
• et de composant(s) présentant au moins une fonction réactive amine, le taux de composants présentant au moins une fonction réactive amine étant d'au moins 6 % en poids de la composition.

10. Procédé de production de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils une composition d'ensimage selon la revendication 9.

11. Procédé selon la revendication 10, *caractérisé en ce que* les fils sont collectés sous forme d'enroulements sur un support en rotation, l'angle de croisure des enroulements étant au moins égal à 1,5°.

12. Procédé selon l'une des revendications 10 ou 11, *caractérisé en ce que* la composition d'ensimage est soumise à un traitement thermique pendant ou après la collecte des fils revêtus de ladite composition.

13. Procédé selon l'une des revendications 10 à 12, *caractérisé en ce que* les fils ensimés collectés sont mis en contact avec une matière organique à renforcer avant soumission de l'ensemble à un traitement thermique de façon à obtenir un composite.

14. Composite comprenant au moins une matière organique et/ou inorganique et des fils de verre ensimés, *caractérisé en ce qu'* il comprend au moins en partie des fils de verre ensimés selon l'une des revendications 1 à 8.

## Claims

1. Glass fibre coated with a sizing composition consisting of a solution having a viscosity lower than or equal to 400 cP comprising less than 5% by weight of solvent and comprising at least one basic system which can be polymerised and/or cross-linked thermally, the said base system comprising at least 60% by weight of constituents having a molecular mass less than 750 and comprising at least 60% by weight of a mixture
- of constituent(s) having at least one epoxy reactive function,
- and of constituent(s) having at least one amine reactive function, the amount of constituents having at least one amine reactive function being at least 6% by weight of the composition.

2. Glass fibre as claimed in Claim 1, characterised in that the basic system comprises at least 60% by weight of a mixture:
- of constituent(s) having at lest one epoxy reactive function,
- and of constituent(s) having at least one primary or secondary amine reactive function.

3. Glass fibre as claimed in one of Claims 1 or 2, characterised in that the basic system represents between 60% and 100% by weight of the sizing composition.

4. Glass fibre as claimed in one of Claims 1 to 3, characterised in that the basic system consists solely of constituents having at least one epoxy or amine reactive function.

5. Glass fibre as claimed in one of Claims 1 to 4, characterised in that the composition further comprises at least one catalyst.

6. Glass fibre as claimed in one of Claims 1 to 5, characterised in that the composition further comprises at least one coupling agent in proportions between 0% and 25% by weight.

7. Glass fibre as claimed in one of Claims 1 to 6, characterised in that the composition further comprises at least one film-forming agent in proportions between 0% and 15% by weight.

8. Glass fibre as claimed in one of Claims 1 to 7, characterised in that the composition further comprises at least one textile agent in proportions between 0% and 15% by weight.

9. Sizing composition for glass fibre consisting of a solution having a viscosity lower than or equal to 400 cP comprising less than 5% by weight of solvent and comprising at least one basic system which can be polymerised and/or cross-linked thermally, the said basic system comprising at least 60% by weight of constituents having a molecular mass less than 750 and comprising at least 60% by weight of a mixture
- of constituent(s) having at least one epoxy reactive function,
- and of constituent(s) having at least one amine reactive function, the amount of constituents having at least one amine reactive function being at least 6% by weight of the composition.

10. Method of producing sized glass fibres in which a multiplicity of molten glass threads running out of a multiplicity of orifices disposed on the base of one or more dies are drawn out in the form of one or more blankets of continuous filaments, then the filaments are brought together to form one or more fibres which are collected on a moving support, the said method consisting of depositing a sizing composition as claimed in Claim 9 on the surface of the filaments in the course of drawing and before the filaments are brought together to form fibres.

11. Method as claimed in Claim 10, characterised in that the fibres are collected in the form of coils on a rotating support, the angle of winding of the coils being at least equal to 1.5°.

12. Method as claimed in one of Claims 10 or 11, characterised in that the sizing composition is subjected to heat treatment during or after the collection of the fibres coated with the said composition.

13. Method as claimed in one of Claims 10 to 12, characterised in that the sized fibres which are collected are put in contact with an organic reinforcing material before it is all subjected to heat treatment so as to obtain a composite.

14. Composite comprising at least one organic and/or inorganic material and sized glass fibres, characterised in that it comprises at least in part sized glass fibres as claimed in one of Claims 1 to 8.

## Patentansprüche

1. Glasfaden, welcher mit einer Schlichtezusammensetzung überzogen ist, die aus einer Lösung mit einer Viskosität von gleich oder niedriger als 400 cP besteht und weniger als 5 Gew.-% Lösungsmittel und wenigstens ein thermisch polymerisierbares und/oder vernetzbares Basissystem umfaßt, das mindestens 60 Gew.-% Bestandteile mit einer Molmasse von unter 750 und mindestens 60 Gew.-% eines Gemischs aus
• (einem) Bestandteil(en), der (die) mindestens eine reaktive Epoxyfunktion aufweist (aufweisen), und aus
• Bestandteil(en), der (die) mindestens eine reaktive Aminfunktion aufweist (aufweisen), wobei der Anteil an Bestandteilen, die mindestens eine reaktive Aminfunktion aufweisen, wenigstens 6 Gew.-% der Zusammensetzung beträgt,
enthält.

2. Glasfaden nach Anspruch 1, **dadurch gekennzeichnet, daß** das Basissystem mindestens 60 Gew.-% eines Gemisches aus
• (einem) Bestandteil(en), der (die) mindestens eine reaktive Epoxyfunktion aufweist (aufweisen), und aus
• Bestandteil(en), der (die) mindestens eine reaktive primäre oder sekundäre Aminfunktion aufweist (aufweisen),
enthält.

3. Glasfaden nach Anspruch 1 oder 2, **dadurch gekennzeichnet, daß** das Basissystem zwischen 60 und 100 Gew.-% der Schlichtezusammensetzung ausmacht.

4. Glasfaden nach einem der Ansprüche 1 bis 3, **dadurch gekennzeichnet, daß** das Basissystem nur aus Bestandteilen besteht, die mindestens eine reaktive Epoxy- oder Aminfunktion aufweisen.

5. Glasfaden nach einem der Ansprüche 1 bis 4, **dadurch gekennzeichnet, daß** die Zusammensetzung außerdem mindestens einen Starter enthält.

6. Glasfaden nach einem der Ansprüche 1 bis 5, **dadurch gekennzeichnet, daß** die Zusammensetzung außerdem mindestens ein Haftmittel in Anteilen zwischen 0 und 25 Gew.-% enthält.

7. Glasfaden nach einem der Ansprüche 1 bis 6, **dadurch gekennzeichnet, daß** die Zusammensetzung außerdem mindestens ein filmbildendes Mittel in Anteilen zwischen 0 und 15 Gew.-% enthält.

8. Glasfaden nach einem der Ansprüche 1 bis 7, **dadurch gekennzeichnet, daß** die Zusammensetzung außerdem mindestens ein Textilhilfsmittel in Anteilen zwischen 0 und 15 Gew.-% enthält.

9. Schlichtezusammensetzung für einen Glasfaden, welche aus einer Lösung mit einer Viskosität von gleich oder niedriger als 400 cP besteht und weniger als 5 Gew.-% Lösungsmittel und wenigstens ein thermisch polymerisierbares und/oder vernetzbares Basissystem umfaßt, das mindestens 60 Gew.-% Bestandteile mit einer Molmasse von unter 750 und mindestens 60 Gew.-% eines Gemischs aus
• (einem) Bestandteil(en), der (die) mindestens eine reaktive Epoxyfunktion aufweist (aufweisen), und aus
• Bestandteil(en), der (die) mindestens eine reaktive Aminfunktion aufweist (aufweisen), wobei der Anteil an Bestandteilen, die mindestens eine reaktive Aminfunktion aufweisen, wenigstens 6 Gew.-% der Zusammensetzung beträgt,
enthält.

10. Verfahren zur Herstellung von mit Schlichte überzogenen Glasfäden, gemäß welchem eine Vielzahl geschmolzener Glasstrahlen, die aus einer Vielzahl von Öffnungen fließen, die am Boden einer oder mehrerer Spinndüsen angeordnet sind, zur Form einer oder mehrerer Bahnen aus endlosen Filamenten gezogen wird und anschließend die Filamente zu einem oder mehreren Fäden vereinigt werden, die auf einem sich bewegenden Träger gesammelt werden, wobei das Verfahren darin besteht, während des Ziehvorgangs und vor Vereinigung der Filamente zu Fäden eine Schlichtezusammensetzung nach Anspruch 9 auf die Oberfläche der Filamente aufzubringen.

11. Verfahren nach Anspruch 10, **dadurch gekennzeichnet, daß** die Fäden auf einem sich drehenden Träger in Form von Spulen gesammelt werden, wobei der Kreuzungswinkel der Spulen mindestens 1,5° beträgt.

12. Verfahren nach Anspruch 10 oder 11, **dadurch gekennzeichnet, daß** die Schlichtezusammensetzung während oder nach dem Sammeln der mit dieser Zusammensetzung überzogenen Fäden einer Wärmebehandlung unterworfen wird.

13. Verfahren nach einem der Ansprüche 10 bis 12, **dadurch gekennzeichnet, daß** die gesammelten, mit Schlichte überzogenen Fäden mit einem zu verstärkenden organischen Stoff in Berührung gebracht werden, bevor das Ganze einer derartigen Wärmebehandlung unterzogen wird, daß ein Verbundwerkstoff erhalten wird.

14. Verbundwerkstoff, der mindestens einen organischen und/oder anorganischen Stoff und mit Schlichte überzogene Glasfäden umfaßt, **dadurch gekennzeichnet, daß** er wenigstens teilweise mit Schlichte überzogene Glasfäden nach einem der Ansprüche 1 bis 8 enthält.
